# EUROPEAN PATENT SPECIFICATION

(11) **EP 0 318 012 B1**
(45) Date of publication and mention of the grant of the patent: **10.11.1993**
(21) Application number: 88119611.7
(22) Date of filing: 24.11.1988
(51) Int. Cl.: G01N 23/207, G01N 23/223

(54) **X-ray analyzer**
Vorrichtung zur Analyse mittels Röntgenstrahlen
Dispositif d'analyse à rayons X

(30) Priority: 27.11.1987 JP 297754/87
(43) Date of publication of application: 31.05.1989
(73) Proprietor: HITACHI, LTD., Chiyoda-ku, Tokyo 100 (JP); HORIBA, LTD., Minami-ku Kyoto (JP)
(72) Inventor: Yamamoto, Naoki, Kawaguchi-City Saitama Prefecture (JP); Takano, Yukio, Musashimurayama-City Tokyo (JP); Hosokawa, Yoshinori, Tsuzuki-gun Kyoto (JP); Yoshino, Kenji, Fushimi-ku Kyoto (JP)
(74) Representative: TER MEER STEINMEISTER & PARTNER GbR

(56) References cited:
- EP-A- 0 325 158
- US-A- 3 628 015
- US-A- 4 143 275
- US-A- 4 263 510
- PATENT ABSTRACTS OF JAPAN, vol. 11, no. 319 (P-627)[2766], 17th October 1987;& JP-A-62 106 352
- REVIEW OF SCIENTIFIC INSTRUMENTS, vol. 53, no. 10, October 1982, pages 1581-1585, American Institute of physics, New York, US; F.J. HENLEY et al.: "Alpha particle collimator for micron-sized beam"
- MESSEN UND PRÜFEN, no. 4, April 1981, pages 210-211, Bad Wörlshofen, DE; P.-H. CYRIS et al.: "Progammierbares Vierkreis-Diffraktometer mit Translationstisch"
- PATENT ABSTRACT OF JAPAN, vol. 7, no. 48 (P-178)[1193], 24th February 1983;& JP-A-57 197 454

## Description

The present invention relates to an X-ray analyzer being capable of performing both X-ray fluorescence analysis and X-ray diffraction.

For the X-ray diffraction of minute crystals a method, in which a minute-sized pinhole of a pinhole type collimator is utilized,or a method with an X-ray guide tube utilizing total reflection of X-rays on an inner wall of a fine glass tube have been proposed (Bulletin of Japanese Society of Metals, 24, No. 11, pp. 939-945 (1985)). According to the latter, X-rays are guided by means of a fine glass tube with the aim to obtain high brilliancy by minute-sized X-rays and collection of X-rays. Further, a paraboloid of revolution collection type X-ray guide tube or an ellipsoid of revolution spheroid type X-ray guide tube have been proposed by simulation with a computer.

As far as known it has never been recognized in the X-ray diffractometry using the above described pinhole type collimator that the brilliancy of the X-rays reaching the sample is lowered. The reason for this effect is that it is difficult to dispose an X-ray incident side end of the collimator adjacent to a focus of a target, which is the X-ray source, because only a part of the X-rays radially emitted from an X-ray target are incident upon the collimator, whereas the X-rays emitted from the pinhole are radially diverged, and the irradiation range on the sample is unable to converge. This has been one of the main reasons why it has been difficult or impossible to satisfyingly conduct X-ray diffraction of a minute crystal and in a minute range.

In addition, in the case where a fine glass tube is used, the problem has occured that even though an X-ray guide tube made of glass is produced on the basis of said simulation and the convergency of the X-rays is evaluated, the X-rays can not be collected as in the simulation.

In addition, in either of the above described cases, the measurement has been conducted in air and the X-ray fluorescence analysis has never been taken into consideration, possibly also because the X-ray diffraction and the X-ray fluorescence analysis can not be performed by means of the same one apparatus.

US-A-4,263,510 describes such an analyzer, which comprises:
- an X-ray source,
- an X-ray guide tube for collecting X-rays emitted from said X-ray source;
- a sample table disposed in the vicinity of an end of said X-ray guide tube for placing a sample; and
- an X-ray detector being mounted to rotate around said sample table about a rotation axis.

It is the object of the present invention to provide an X-ray analyzer capable of performing X-ray fluorescence analysis and X-ray diffraction of very minute samples.

The analyzer of the present invention comprises the above features of the prior art analyzer, and it is characterized in that
- said X-ray detector is also movable in the radial direction;
- the inner surface of the X-ray guide tube has a paraboloid shape at least in the region of its outlets such that X-rays incident upon said inner paraboloidal surface in the vicinity of the outlet at an angle greater than the critical angle of total reflection are substantially prevented from leaking out of the tube.

According to the present invention, an energy dispersion type X-ray diffraction, a wavelength dispersion type X-ray diffraction and an X-ray fluorescence analysis can be conducted by one and the same X-ray analyzer. In the case where it is necessary to detect low-energy fluorescent X-rays, it is necessary to dispose the sample table and the X-ray detector in the same one vacuum tank and keep an inside of the X-ray guide tube under vacuum. In addition, it is preferred that the above described vacuum tank and the inside of the X-ray guide tube are continuously under vacuum condition. In Air the low-energy fluorescent X-rays are attenuated so as not to arrive at the detector.

In addition, it is preferred that the sample table and the X-ray detector are coaxially arranged and independently rotatable. In the X-ray fluorescence analysis, in order to efficiently detect weak fluorescent X-rays, it is advantageous if the X-ray detector gets as near as possible to the sample while in the X-ray diffraction, in particular the wavelength dispersion tube X-ray diffraction, it is to be preferred that the wavelength of the X-rays is fixed, the sample and the detector being rotated to measure the diffraction angle, at which the peak appears under the conditions meeting the diffraction condition of a Bragg cell, and it is preferred that the X-ray detector is disposed apart from the sample so as to make the separation of the diffraction angle easy. Accordingly, it is advantageous if the X-ray detector is movable in the radial direction of the above described rotation.

It is further advantageous if the sample table is movable independently in at least two axial directions and rotatable around an axis meeting at a right angle with the axis of rotation for the sample table and the detector so that the sample surface may be inclined. Such a rotating mechanism can be used for the evaluation of the anisotropy of internal stress by the X-ray diffraction measurement method.

In addition, means for heating the sample are preferably provided. For example, the sample table is equipped with a resistance heater. Such the heating means can be used for the observation of stress and a corresponding reaction process.

With the X-ray analyzer according to the present invention, the X-ray fluorescence analysis and the energy dispersion type X-ray diffraction method can be conducted in the same one apparatus, so that for example the energy value of the diffraction peak from a desired sample can be determined from the energy value of the fluorescent X-rays. In addition, the diffraction peak energy value can be determined from the energy value of the characteristic X-rays of the material of the X-ray source detected by elastic scattering or by using it together with the energy value of the fluorescent X-ray energy value.

Further, for example the wavelength dispersion type X-ray diffraction method can be conducted by determining the angle of rotation of the sample table and the detector relative to the incident X-ray bundle from the energy value obtained by the above described method and correcting the angle of the rotating system in the apparatus or using this corrected angle of rotation as the relative angle of rotation of the sample table and the detector.

With the X-ray analyzer according to the present invention, the X-ray beams are highly parallel to each other, so that it is easy to set the conditions for the total reflection of the beams incident upon the sample, whereby for example, the so-called total reflection X-ray fluorescence analysis becomes possible. Under these conditions, the X-rays hardly arrive at the detector arranged so as to turn in the direction meeting at almost right angles with the sample surface, whereby a S/N ratio in the detection of the fluorescent X-rays is remarkably improved.

Preferred embodiments of the X-ray guide tube used with the present invention and further details of the invention will be described in the following with reference to the accompanying drawings of which
- Fig. 1: is a block diagram of one preferred embodiment of the basic construction according to the present invention;
- Fig. 2: is an upside view showing an arrangement of parts in one preferred embodiment of the present invention;
- Fig. 3: is a diagram of an energy spectrum of the fluorescent X-rays and the diffraction rays in Example 1 (see below);
- Figs. 4a,b,c: are sections of conventional guide tubes; and
- Figs. 5a,b: are sectional views showing one preferred embodiment of an X-ray guide tube.

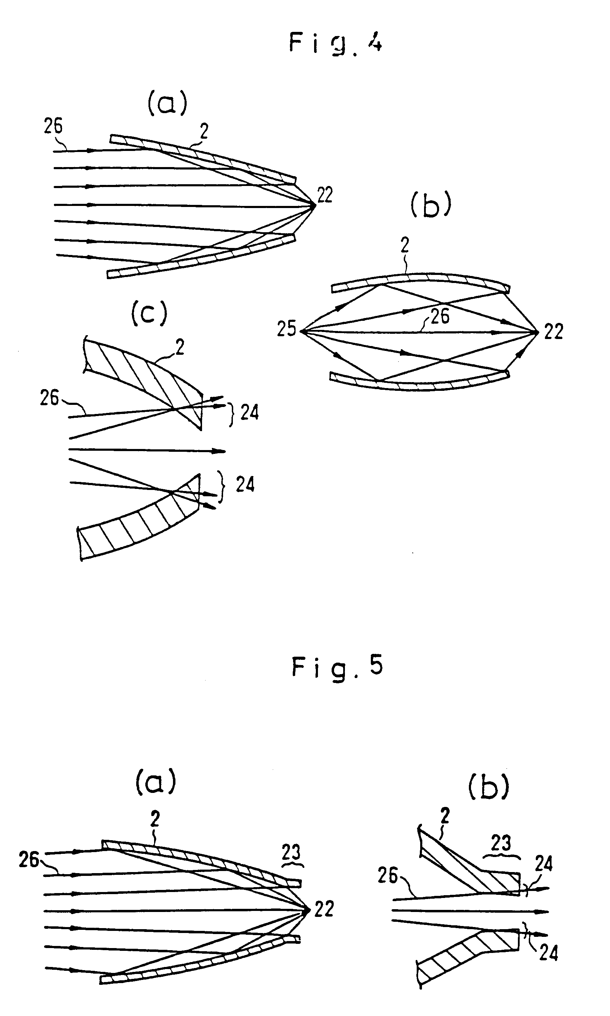

The reference numerals used in the drawings have the following meaning:
- 1:: X-ray apparatus
- 2:: X-ray guide tube
- 3:: Goniometer
- 4:: sample table
- 5:: sample chamber
- 6:: detector
- 7:: laser source
- 8:: television camera
- 9:: monitor
- 10:: scintillation counter
- 11:: mirror
- 12:: evacuating system
- 22:: focus
- 23:: X-ray divergence-suppressing range
- 24:: X-ray transmission range
- 25:: focus
- 26:: X-rays
The conventional X-ray guide tube, which has been proposed by said simulation, as shown in Fig. 4(a), (b), collects the X-rays 26 incident upon the X-ray guide tube 2 on each focus 22 by the use of total reflection on the inner wall thereof with the intention to obtain minute and highly brilliant irradiated X-ray beams. However, when a photographic film is brougth into direct contact with the emitting end of this paraboloid of revolution collection type of an X-ray guide tube made of glass having an inside diameter of 15 µm and an outside diameter of 1 mm, the X-rays being emitted from the incident end of the tube, and the photo-sensitive spot on the film being measured, the beams are expanded to 73 µm, i.e. about five times the actual diameter to the opening. In addition, the X-ray beams are expanded to 410 µm in diameter at a position of 20 mm from the emitting end which is a focal position of the tube.

The reason why the inside diameter at the emitting end is remarkably different from the diameter of the X-rays at the end portion is the fact that the X-rays incident upon the inner wall in the vicinity of the emitting end at a high angle value of the critical angle of total reflection transmit the inside of the tube wall to be emitted to the outside, whereby the diameter of the X-ray beams is substantially expanded as compared with the inside diameter of the end portion; see Fig. 4(c).

Accordingly, it is an improvement to select the construction so that the X-rays incident upon the inner wall of the tube at the high angle of the critical angle of total reflection may not substantially leak in the emitting direction in the end portion range on the X-ray-emitting side of the X-ray guide tube. For example, this can be achieved by increasing the wall thickness of the tube in the end portion range in comparison with that of other parts, or by a change of the inside diameter in the end portion range in comparison with that in other ranges, or by providing a parallel portion 23 compared to that in other ranges, as shown in Fig. 5(a), (b). In this case, a small part of the X-ray transmission range 24 may be retained in the end portion range, as shown in Fig. 5(b).

The use of such the X-ray guide tube leads to the possibility of efficiently guiding the X-rays from the X-ray source to the end portion of the tube. In addition, since this construction effectively prevents the X-rays from leaking from the tube wall in the end portion on the X-ray emitting side, minute and highly brilliant X-ray beams can be obtained. Also the parallel X-ray beams of the same extent as the synchrotron-emitted light can be obtained.

Such a guide tube can also be used in other usual X-ray analyzers.

Since the emitting end of the X-ray guide tube for guiding the X-rays is arranged in the vicinity of the the target of the X-ray source, the X-rays, which have been divergently emitted from the target focus, can be efficiently kept in the X-ray guide tube. In addition, the end portion on the emitting side of the X-ray guide tube can be disposed in the vicinity of the sample and the X-rays emitted from the guide tube pass through with totally reflecting with the effect that divergence is reduced. Thus, minute X-ray beams having high brilliancy and parallelism or minutely converged can be applied to a very small portion of the sample.

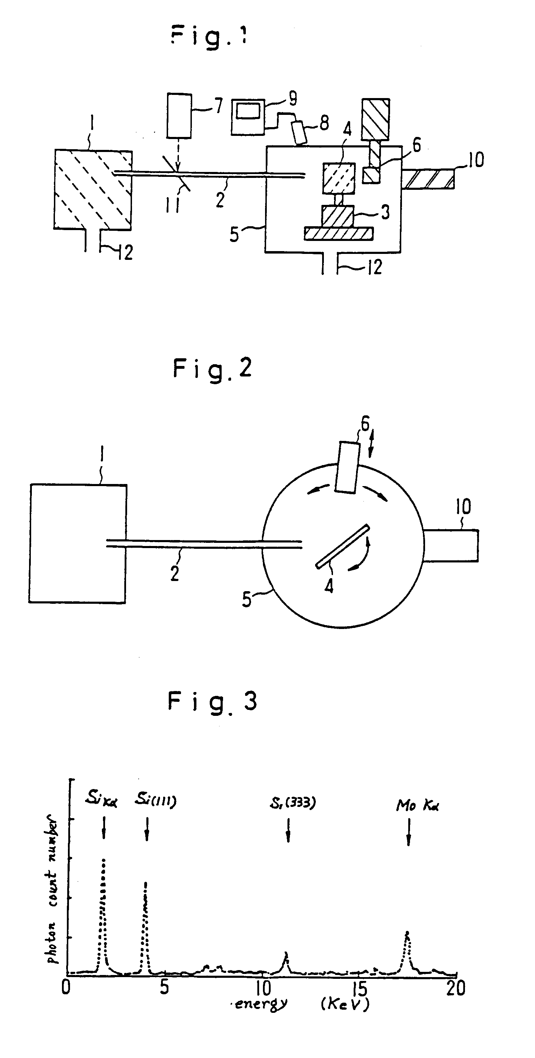

The preferred embodiments of the present invention will be below described with reference to Fig. 1.

### EXAMPLE 1

In the present first Example, in order to obtain highly brilliant X-rays, a fine focus rotary pair of cathode type X-ray apparatus 1 (60 kV, 300 mA) was used. A thin glas tube having an inside diameter at an incident end of 100 µm, an inside diameter at an emitting end on a sample side of 3 µm and a length of 60 cm was used as the X-ray guide tube 2 for guiding an X-ray bundle from the X-ray source to the sample. The opened end of the X-ray guide tube 2 was installed at a distance of about 1 cm from the X-ray target focus and the other end of the X-ray guide tube 2 was installed at a distance of about 1 cm from the sample table 4 mounted on a goniometer 3. The X-ray source 1, the X-ray guide tube 2 and a sample chamber 5 were connected in this order and the insides thereof were evacuated. Diffraction X-rays and fluorescent X-rays were detected by a Li-doped Si semiconductor detector 6 having a relatively large area of about 100 mm². The position of the X-ray incident upon the sample was observed by means of a monitor 9 by guiding a laser beam emitted from a laser light source 7 so as to be parallel to and coaxial with the X-ray guide tube 2 and photographing a laser spot incident upon the sample by means of a television camera 8. The sample table 4 and the detector 6 were mounted for coaxial and independent rotation. The goniometer 3 for moving the sample table 4 could be rotated around X, Y and Z axes of rectangular coordinates, so as to bring the sample table 4 in any desired tilt position, or in other words, so as to rotate the sample in a plane in addition to the above described rotation. In addition, the detector 6 was supported for a radial movement (Fig. 2). The reason for such construction details is that for an X-ray fluorescence analysis the detector should be approached to the sample as close as possible to efficiently detect weak fluorescent X-rays while for X-ray diffraction the detector should be positioned apart from the sample for easy separation of the diffraction angle in order to make possible not only the energy dispersion X-ray diffraction but also the wavelength dispersion type X-ray diffraction method, i.e. the X-ray wavelength is fixed, the sample and the detector are rotated, and the diffraction angle, at which the peak appears is measured under the conditions meeting the diffraction conditions of Bragg. The sample table 4 could be heated up to 1000°C by means of a resistance heater.

In order to achieve good performance of the apparatus according to the present invention, the divergence of the X-ray beams from the end portion of the emitting side of the X-ray guide tube 2 at a time, when a Mo target was used as the X-ray source 1, was measured by means of a photographic dry plate. It could be confirmed that a spot having a diameter of about 4 to 5 µm was observed on the end portion on the emitting side and a spot having a diameter of 7 to 8 µm on the sample table 4, the divergence angle being 10⁻³ radians or less, and the X-ray beams having a remarkably good parallelity equivalent to the X-rays obtained by the light emitted from a synchrotron. Besides, the brilliancy of the X-ray beam on the sample table 4 exhibited a value higher than that obtained when a pinhole type collimator having a diameter of 3 µm was used (a simulation value by the computer) by about three figures.

Fig. 3 shows the results of measurements of the fluorescent X-rays and the energy dispersion diffraction peak from a range having a diameter of about 7 to 8 µm of a Si (111) single crystal at room temperature. As shown in the drawing, also the Kα line of Mo incident upon the detector by the elastic scattering from the Mo target of the X-ray source was observed in addition to the fluorescent X-rays of Si. In the case where the diffraction peak energy was determined using both the fluorescent X-rays of Si and the Kα line of Mo, even the diffraction peak in the high-energy range could be determined with high accuracy. In addition, the Gaussian fitting of energy spectrum was applied in the determination of the energy value.

### EXAMPLE 2

The same construction as in Example 1 except that the X-ray apparatus 1 and the system comprising the X-ray guide tube 2 and the sample chamber 5 were arranged independent of each other by adhering a Be thin plate to an end portion on an incident side of the X-ray guide tube 2 for passing X-rays therethrough to evacuate them by means of separate exhaust apparatus. In Example 1, since the X-ray guide tube 2 was connected with the X-ray source 1, the vibration generated during the time when a rotating pair of cathodes were rotated was transmitted to the X-ray guide tube 2, whereby also the end portion on the emitting side of the X-ray guide tube 2 was vibrating with the result that the irradiation range on the sample was expanded. In the present Example, since the X-ray guide tube 2 is not brought into contact with the X-ray source system 1, the vibration of the rotating cathode portion has no influence and the X-ray irradiation range on the sample is improved, i.e. comes down to 6 to 7 µm in diameter.

### EXAMPLE 3

In the third Example, the X-ray fluorescence analysis was improved in sensitivity by the use of an apparatus having the same construction as in Example 1. As above described, the X-ray beams emitted from the X-ray guide tube 2 are remarkably high in parallelity. The present Example shows the highly sensitive X-ray fluorescence analysis using this parallelity. Patterns formed of tungsten (W) having surface areas of 1 µm², 0.64 µm² and 0.25 µm² were formed on a Si substrate to produce samples having a thickness of W of 500, 100 and 50 nm, respectively. Provided that the density of W is 19,3 g/cm³, the weight of the W pattern having a surface area of 1 µm² and a thickness of 500 nm amounts to about 9.7 pg and that of one pattern having a surface area of 0.25 µm² and a thickness of 50 nm amounts to 0.24 pg. A rotating pair of cathodes type Mo target X-ray source was used to generate X-rays at 60 kV and 300 mA and emit them from the X-ray guide tube. The incident angle of the X-rays upon the sample was set at 60°. In this case, fluorescent X-rays of W could be detected to a minimum pattern 2.4 pg. Patterns having a weight of 2.4 pg or less could not be detected due to noise resulting from the incident X-rays. On the other hand, the position, where the X-rays are incident upon the sample, was determined by means of a scintillation counter 10 shown in Fig. 1 so that the conditions of total reflection could be determined. A semiconductor detector was arranged close to the surface of the Si substrate as far as possible in a direction meeting at right angle with the surface of the Si substrate to conduct an X-ray fluorescence analysis in the same manner. In this case, the background noise resulting from the incident X-rays was reduced and the fluorescent X-rays of an infinitesimal quantity of tungsten of 0.48 pg could be detected as a result of the effect of the disposition of the detector close to the sample.

### EXAMPLE 4

In the fourth example the construction of the X-ray guide tube was investigated. At first, and as a basic construction, soda glass tube having an inside diameter of 1 mm and an outside diameter of 10 mm was drawn under temperature control of local heating and drawing speed to produce a paraboloid of revolution collection type of an X-ray guide tube having an inside diameter on the incident side of the X-rays of 90 µm, an inside diameter at the end portion on the emitting side of 5 µm and a focal distance positioned at a point of 20 mm from the end portion. The construction of this X-ray guide tube is shown in Fig. 4(a).

Next, after the glass tube was drawn under the same conditions as above described, the drawing speed was rapidly increased at a point of time when the diameter at the end portion amounted to 5 µm to add a parallel tube portion 23 of about 2 mm to an end portion of the paraboloid of revolution, as shown in Fig. 5(a). The inside diameter of the end portion on the emitting side of this parallel tube-like X-ray guide tube was set at about 5 µm. The divergence of the X-ray beams of these two pieces of X-ray guide tubes 2 was measured by use of photographic film. The former construction diverged the beam until a diameter of 23 µm at the end portion on the emitting side and to 120 µm at the focal portion. On the other hand, the latter construction diverged the beam to a diameter of merely 7 µm at the end portion of the guide tube 2 and to 8 µm at the focal portion. That is to say, with the latter construction according to the invention, the divergence of the X-rays could be suppressed, the collection efficiency is highly improved, and a very minute beam can be obtained. In addition, measurements confirmed the brilliancy of the X-ray beam at the focal portion with the latter construction, i.e. the brilliancy achieved is higher than that resulting from the known construction by about 1.5 figures.

In addition, although soda glass was used for the X-ray guide tube 2 in the present Example, it was found that the convergency of the X-rays could be remarkably improved also in the case where the X-ray guide tube was formed of other kinds of glass, such as pyrex glass and lead glass, and of metals, such as molybdenum.

According to the present invention, a minute perfectly converged X-ray beam showing high brilliancy and parallelity with a diameter of several microns can be obtained, so that X-ray diffraction and X-ray fluorescence analysis for very minute ranges of several microns to several ten microns level, which have been seemed to be difficult to achieve, become possible. In addition, X-ray fluorescence analysis, energy dispersion X-ray diffraction and wavelength dispersion X-ray diffraction methods can be achieved with only one and the same apparatus.

## Claims

1. An X-ray analyzer capable of performing both X-ray fluorescence analysis and X-ray diffraction, said analyzer comprising:
- an X-ray source (1),
- an X-ray guide tube (2) for collecting X-rays emitted from said X-ray source (1);
- a sample table (4) disposed in the vicinity of an end of said X-ray guide tube (2) for placing a sample; and
- an X-ray detector (6) being mounted to rotate around said sample table about a rotation axis
**characterized in that**
- the X-ray detector (6) is also movable in the radial direction;
- the inner surface of the X-ray guide tube (2) has a paraboloid shape at least in the region of its outlets such that X-rays incident upon said inner paraboloidal surface in the vicinity of the outlet at an angle greater than the critical angle of total reflection are substantially prevented from leaking out of the tube.

2. An analyzer according to claim 1, **characterized in that** the wall thickness in the end portion of the tube is increased in comparison with that in other parts.

3. An analyzer according to claim 1, **characterized in that** the end portion (23) of the tube is of essentially cylindrical type.

4. An analyzer according to one of the claims 1 to 3, **characterized in that** said sample table (4) is rotatable around said rotation axis, independent from the rotation of said X-ray detector (6).

5. An analyzer according to one of the preceding claims, **characterized in that** said sample table (4) and said X-ray detector (6) are disposed within the same one vacuum tank (5), and the inside end of said X-ray guide tube (2) is opened into said vacuum tank (5).

## Patentansprüche

1. Röntgenstrahlanalysator, der dazu in der Lage ist, sowohl Röntgenfluoreszenzanalyse als auch Röntgenstrahlbeugung auszuführen, welcher Analysator folgendes aufweist:
- eine Röntgenstrahlquelle (1);
- ein Röntgenstrahlführungsrohr (2) zum Sammeln von Röntgenstrahlen, die von der Röntgenstrahlquelle (1) emittiert werden;
- einen Probentisch (4), der in der Nähe eines Endes des Röntgenstrahlführungsrohrs (2) angeordnet ist, um eine Probe anzuordnen; und
- einen Röntgenstrahldetektor (6), der so angebracht ist, daß er sich um eine Rotationsachse um den Probentisch dreht;
**dadurch gekennzeichnet,** daß
- der Röntgenstrahldetektor (6) auch in radialer Richtung bewegbar ist;
- die Innenfläche des Röntgenstrahlführungsrohrs (2) zumindest in ihrem Austrittsbereich paraboloidförmige in solcher Weise ausgebildet ist, daß auf diese innere paraboloidförmige Fläche in der Nähe des Austritts mit einem Winkel größer als der kritische Winkel der Totalreflexion auftreffende Röntgenstrahlen im wesentlichen daran gehindert werden, aus dem Rohr auszulecken.

2. Analysator nach Anspruch 1, **dadurch gekennzeichnet,** daß die Wanddicke im Endabschnitt des Rohrs im Vergleich zu derjenigen in anderen Teilen erhöht ist.

3. Analysator nach Anspruch 1, **dadurch gekennzeichnet,** daß der Endabschnitt (23) des Rohrs im wesentlichen von zylindrischem Typ ist.

4. Analysator nach einem der Ansprüche 1 bis 3, **dadurch gekennzeichnet,** daß der Probentisch (4) um die Rotationsachse drehbar ist, unabhängig von der Rotation des Röntgenstrahldetektors (6).

5. Analysator nach einem der vorstehenden Ansprüche, **dadurch gekennzeichnet,** daß der Probentisch (4) und der Röntgenstrahldetektor (6) innerhalb desselben einen Vakuumgefässes (5) angeordnet sind, und das innere Ende des Röntgenstrahlführungsrohrs (2) in das Vakuumgefäß (5) hinein geöffnet ist.

## Revendications

1. Dispositif d'analyse à rayons X apte à effectuer à la fois une analyse de fluorescence aux rayons X et une diffraction des rayons X, ledit dispositif d'analyse comprenant :
- une source de rayons X (1);
- un tub-guide de rayons X (2) pour collecter les rayons X émis par ladite source de rayons X (1) ;
- une table d'échantillon (4) disposée au voisinage d'une extrémité dudit tube-guide de rayons X (2) pour placer un échantillon et;
- un détecteur de rayons X (6) monté pour tourner autour de ladite table d'échantillon par rapport à un axe de rotation,
caractérisé en ce que
le détecteur de rayons X (6) est également mobile dans la direction radiale ;
la surface intérieure du tube guide de rayons X (2) possède la forme d'un paraboloïde au moins dans la région de sa sortie de telle sorte que des rayons X incidents sur ladite surface interne en forme de paraboloïde au voisinage de la sortie selon un angle supérieur à l'angle critique de réflexion totale sont sensiblement empêchés de s'échapper du tube.

2. Dispositif d'analyse selon la revendication 1, caractérisé en ce que l'épaisseur de paroi dans la partie d'extrémité du tube est accrue en comparaison avec celle des autres parties.

3. Dispositif d'analyse selon la revendication 1, caractérisé en ce que la partie d'extrémité (23) du tube est de type essentiellement cylindrique.

4. Dispositif d'analyse selon l'une des revendications 1 à 3, caractérisé en ce que la table d'échantillon (4) est apte à tourner par rapport audit axe de rotation indépendamment de la rotation dudit détecteur de rayons X (6).

5. Dispositif d'analyse selon l'une des revendications précédentes, caractérisé en ce que ladite table d'échantillon (4) et ledit détecteur de rayons X (6) sont disposés dans la même enceinte sous vide (5), et l'extrémité intérieure dudit tube-guide de rayons X (2) débouche dans ladite enceinte sous vide (5).
